# EUROPÄISCHE PATENTSCHRIFT

(11) **EP 2 892 705 B1**
(45) Veröffentlichungstag und Bekanntmachung des Hinweises auf die Patenterteilung: **12.10.2016**
(21) Anmeldenummer: 13750068.2
(22) Anmeldetag: 16.08.2013
(51) Int. Cl.: B29C 47/08, B65G 53/52, B29B 17/00, B29C 47/34, B65F 5/00

(54) **VORRICHTUNG ZUM ABSAUGEN VON ABFALLPRODUKTEN EINER PRODUKTIONSMASCHINE**
DEVICE FOR SUCTIONING OFF WASTE PRODUCTS FROM A PRODUCTION MACHINE
DISPOSITIF POUR ASPIRER DES PRODUITS DE REBUT D'UNE MACHINE DE PRODUCTION

(30) Priorität: 04.09.2012 DE 102012108196
(43) Veröffentlichungstag der Anmeldung: 15.07.2015
(73) Patentinhaber: Windmöller & Hölscher KG, 49525 Lengerich (DE)
(72) Erfinder: SEHLLEIER, Thomas, 48151 Münster (DE)
(74) Vertreter: Vogel, Andreas
(86) Internationale Anmeldenummer: PCT/EP2013/067107
(87) Internationale Veröffentlichungsnummer: WO 2014/037206

(56) Entgegenhaltungen:
- EP-A1- 0 305 152
- WO-A1-02/064333
- WO-A1-2009/022964
- JP-A- S4 883 575
- JP-A- H07 228 305
- JP-A- 2001 031 246
- JP-U- S5 416 171
- JP-U- H01 109 018
- JP-U- S54 152 492
- US-A- 3 759 580
- US-A- 4 976 288

## Beschreibung

Die Erfindung betrifft eine Vorrichtung zum Absaugen von Abfallprodukten einer Produktionsmaschine, insbesondere einer Folienextrusionsmaschine, mit einer Saugkammer, an der mindestens ein Absaugelement angeordnet ist, das sich in einen außerhalb der Saugkammer befindlichen Absaugraum erstreckt, um Abfallprodukte in die Saugkammer zu befördern, und einer Saugeinheit, um einen Unterdruck in der Saugkammer entstehen zu lassen.

Aus dem Stand der Technik (siehe EP 0367 517 A2, JP H01109018 U) sind diverse Absaugvorrichtungen bekannt, um Abfallprodukte einer Produktionsmaschine abzusaugen. Zum Beispiel kommen Absaugrohre zum Einsatz, die als Absaugelement dienen, wobei die Rohre manuell in ihrer Position eingestellt werden können, um je nach Einsatzgebiet wirkungsvoll anfallende Abfallprodukte an einer Produktionsmaschine absaugen zu können. Diese Rohre münden in einer Hauptleitung, in der ein Unterdruck durch ein Gebläse produziert wird. Nachteiligerweise ergeben sich in dieser Hauptleitung teilweise Störgeometrien. Zudem ergeben sich nachteiligerweise bei der bekannten Absaugvorrichtung ungleichmäßige Geschwindigkeits- und Druckfelder in der Hauptleitung sowie in den einzelnen Absaugelementen, welches nicht erwünscht bzw. zu vermeiden ist, da beispielweise die Gefahr besteht, dass die Absaugvorrichtung durch die Abfallprodukte verstopfen können, oder dass die anfallenden Abfallprodukte nicht zuverlässig von der Produktionsmaschine, insbesondere vom Absaugraum abgesaugt werden können.

Die Aufgabe der vorliegenden Erfindung ist es, die oben genannten Nachteile zu vermeiden, insbesondere eine Vorrichtung der genannten Art zu schaffen, die zuverlässig anfallende Abfallprodukte einer Produktionsmaschine absaugt, wobei gleichzeitig eine Verstopfungsneigung innerhalb der Absaugvorrichtung reduziert wird.

Die Aufgabe der vorliegenden Erfindung wird durch sämtliche Merkmale des Patentanspruches 1 gelöst. In den abhängigen Ansprüchen sind vorteilhafte Ausführungsformen beschrieben.

Erfindungsgemäß ist vorgesehen, dass ein Abdichtmittel, das am Absaugelement anliegt und die Saugkammer verschließt, derart ausgeführt ist, dass das Absaugelement entlang des Abdichtmittels bewegbar ist, wodurch die Position des Absaugelements an der Saugkammer variabel einstellbar ist. Besonders vorteilhaft ist, dass das Absaugelement variabel an der Saugkammer in seiner Position bewegt und verstellt werden kann, um flexibel in unterschiedlichen Produktionsmaschinen eingesetzt zu werden. Das bedeutet, dass die Position des Absaugelementes entsprechend des Ortes, wo Abfallprodukte der Produktionsmaschine anfallen, positioniert werden kann. Gleichzeitig sorgt das Abdichtmittel dafür, dass unabhängig von der Position des Absaugelementes eine zuverlässige Abdichtung der Saugkammer gewährleistet ist, sodass die Saugleistung der Absaugvorrichtung nicht durch die Position des Absaugelementes negativ gestört oder beeinflusst wird. Dadurch können Verstopfungen innerhalb der Saugkammer wirkungsvoll vermieden werden, da insbesondere unabhängig von der Position des Absaugelementes das Abdichtelement eine Abdichtung der Saugkammer gewährleistet.

Das Abdichtmittel weist eine Öffnung für das Absaugelement auf, so dass zumindest teilweise das Absaugelement sich durch die Öffnung des Abdichtmittels erstreckt. Im Bereich der Öffnung ist das Abdichtmittel vorteilhafterweise am Absaugelement kontaktiert, sodass auch an dieser Stelle eine Abdichtung vorliegt.

Damit das Absaugelement individuell in seiner Position relativ zur Saugkammer eingestellt werden kann, kann die Saugkammer eine Lagerung aufweisen, an der das Absaugelement bewegbar gelagert ist. Zum Beispiel ist es denkbar, dass die Lagerung als Schienensystem ausgeführt ist. Beispielsweise kann es in einer Ausführungsform der Erfindung denkbar sein, dass das Absaugelement linear entlang der Saugkammer verschoben werden kann.

Erfindungsgemäß ist das Absaugelement entlang des Abdichtmittels verschiebbar, wobei während der Bewegung des Absaugelementes die Position der Öffnung des Abdichtmittels sich mitbewegt. Das bedeutet, dass bei einer Bewegung des Absaugelementes Bereiche des Abdichtmittels, die zuvor verschlossen sind, sich öffnen und somit eine entsprechende Öffnung für das Absaugelement bieten. Gleichzeitig verschließt sich die Öffnung des Abdichtmittels, durch die zuvor das Absaugelement hindurch ragte. In einer möglichen Ausführungsform der Erfindung kann die Absaugvorrichtung derart ausgebildet sein, dass das Abdichtmittel eine Naht aufweist, die während der Bewegung des Absaugelementes sich an definierten Stellen öffnet und gleichzeitig an definierten Stellen schließt. Hierbei ist das Abdichtmittel derart ausgebildet, dass die verschlossene Naht zuverlässig die Saugkammer vom Außenbereich abschließt, sodass nahezu keine Druckverluste während des Betriebes aufgrund der vorliegenden Naht entstehen.

Beispielsweise kann das Abdichtmittel als Rollodichtung ausgebildet sein, wobei während der Bewegung des Abdichtmittels die Rollodichtung sich aufrollen und/oder abrollen kann, damit an den Stellen, wo das Absaugelement sich nicht befindet, die Rollodichtung wirkt und somit die Saugkammer zuverlässig abdichtet. In der Regel sind dem Absaugelement zwei Rollodichtungen zugeordnet, wobei bei einer Bewegung des Absaugelementes entlang der Saugkammer eine der beiden Rollodichtungen sich abrollt und eine sich aufrollt.

Alternativ kann das Abdichtmittel als Dichtung mit einem Reißverschluss versehen sein, der bei einer Bewegung des Absaugelementes sich öffnet und/oder sich verschließt. Auch hier, wie bei der Rollodichtung, bietet es sich an, dass bei einem Absaugelement zwei Abdichtmittel mit jeweils einem Reißverschluss vorgesehen sind.

Zudem kann die erfindungsgemäße Vorrichtung ein Abdichtmittel mit umfassen, welches aus Teleskopelementen ausgebildet ist, die während der Bewegung des Absaugelementes in seine jeweilige Stellung teleskopartig ausfahren und/oder einfahren, wobei gleichzeitig die Teleskopelemente für eine zuverlässige Abdichtung der Saugkammer sorgen.

In einer weiteren Alternative der Erfindung kann das Abdichtmittel einen Zipverschluss, Magnetbänder und/oder einen Klettverschluss aufweisen, um bei einer Bewegung des Absaugelementes entlang der Saugkammer das Abdichtmittel entsprechend abzudichten bzw. eine definierte Öffnung für das Absaugelement bereitzustellen.

Ebenfalls kann die Erfindung vorsehen, dass das Abdichtmittel Klappsegmente umfasst, die während der Bewegung des Absaugelementes entlang der Saugkammer sich öffnen, und zwar im Bereich der Öffnung, durch die das Absaugelement hindurchragt. An den Stellen, wo das Absaugelement sich nicht im Bereich des Abdichtmittels befindet, sind die Klappsegmente eingeklappt bzw. in einer Schließstellung und sorgen für eine zuverlässige Abdichtung der Saugkammer. Alternativ und/oder zusätzlich kann das Abdichtmittel eine Profildichtung sein, die eine Naht aufweist, entlang dieser das Absaugelement verfahren kann. Entsprechend der Position des Absaugelementes bildet sich die Öffnung am Abdichtmittel. Die benachbarten Bereiche des Abdichtmittels sind hingegen verschlossen.

In einer weiteren vorteilhaften Ausführungsform der Erfindung weist die Saugkammer einen sich verjüngenden Verlauf in ihrem Querschnitt auf, wobei der Querschnitt der Saugkammer, an der der Saugeinheit zugewandten Seite größer ist als der Querschnitt an der der Saugeinheit abgewandten Seite. Diese Ausführungsform kann insbesondere dann vorteilhaft sein, wenn mehrere Absaugelemente an der Saugkammer angeordnet sind. Hierdurch wird erzielt, dass in der Saugkammer eine gleichmäßige Strömung während des Betriebes der erfindungsgemäßen Vorrichtung erzeugt wird. In diesem Zusammenhang hat sich gezeigt, dass eine konische Ausgestaltung der Saugkammer vorteilhaft ist. Diese konische Geometrie verhindert, dass die Strömungsgeschwindigkeit zwischen den einzelnen Absaugelementen extrem absinkt. Des Weiteren wird wirkungsvoll verhindert, dass sich störende Strömungswirbel in der Saugkammer sowie in den Absaugelementen bilden.

Ferner kann vorgesehen sein, dass das Absaugelement ein Rohr und einen Fuß aufweist, wobei das Absaugelement im wesentlichen außerhalb der Saugkammer sich befindet und der Fuß unterhalb des Abdichtmittels innerhalb der Saugkammer angeordnet ist, wobei insbesondere der Fuß plan ausgebildet ist und innenseitig der Saugkammer am Abdichtmittel anliegt. Der Fuß sowie das Rohr können miteinander form- und/oder kraft- und/oder stoffschlüssig verbunden sein. Beispielsweise ist es denkbar, dass das Rohr mit dem Fuß verschweißt oder verschraubt ist. Der Fuß kann als Platte ausgebildet sein, wobei gleichzeitig der Fuß eine gewisse Abdichtfunktion aufweisen kann, da er sich unterhalb oder oberhalb des Abdichtmittels befindet und gerade an der kritischen Stelle der Öffnung zusätzlich dafür sorgt, dass die Saugkammer von der Umgebung abgedichtet ist. Der Fuß kann auch als Führungshilfe für das Absaugelement dienen.

Zudem kann die Erfindung mit umfassen, dass das Absaugelement einen Wagen aufweist, der an der Lagerung, die außerhalb der Saugkammer angeordnet ist, angreift. Der Wagen ermöglicht, dass eine zuverlässige Positionsverschiebung des Absaugelementes entlang der Lagerung möglich ist. Zusätzlich ist es denkbar, dass Arretiermittel vorgesehen sind, die die Position des Wagens an der Saugkammer fixieren, sodass eine ungewollte Positionsverschiebung des Wagens ausgeschlossen ist.

Die Erfindung kann zudem derart weitergebildet sein, dass das Absaugelement einen Einlassbereich, das in den Absaugraum hineinragt, und einen Auslassbereich aufweist, der in Richtung Saugkammer gerichtet ist, wobei insbesondere der Auslassbereich tangential zur Saugkammer gerichtet ist. Der tangentiale Einlauf des Absaugelementes mit seinem Auslassbereich in die Saugkammer hat den Vorteil, dass ein extremes Unterdruckgebiet kurz vor dem Einlauf in die Saugkammer verhindert wird, welches nachteiligerweise Verstopfungen hervorrufen könnte.

Zudem kann vorgesehen sein, dass das Absaugelement einen gekrümmten Verlauf aufweist, wobei zumindest eine Wandung derart innerhalb des Absaugelementes vorgesehen ist, dass ein Strömungswiderstand an der Wandung entsteht, der dafür sorgt, dass ein Verbleiben von Abfallprodukten innerhalb des Absaugelementes vermieden wird. Beispielsweise kann die erfindungsgemäße Vorrichtung derart weitergebildet sein, dass zumindest eine Blende als Wandung in das Absaugelement, insbesondere in das gekrümmte Rohr sich erstreckt. Alternativ und/oder zusätzlich kann die Wandung als Leitblech ausgebildet sein, dass die geometrische Kontur des Absaugelementes zumindest bereichsweise beeinflusst, insbesondere, dass das Leitblech schräg zur Öffnung des Einlassbereiches des Absaugelementes geneigt ist. Die Wandung dient zur Erhöhung des Strömungswiderstandes innerhalb des Absaugelementes, insbesondere vor dem Einlauf in die Saugkammer. Während des Betriebes der erfindungsgemäßen Vorrichtung entsteht vor der Wandung ein Staudruck, der überraschenderweise die Abfallprodukte, die durch die erfindungsgemäße Vorrichtung eingesaugt werden, in die Mitte des Absaugelementes lenkt. Somit entsteht nicht, dass die Abfallprodukte an der Innenwandung des Absaugelementes hängen bleiben, und insbesondere eine Verstopfung aufgrund vorliegender Unterdrücke hervorrufen.

Vorteilhafterweise kann die Lagerung ein Schienenelement umfassen, wodurch insbesondere das Absaugelement linear verschiebbar ist. Zudem ist es möglich, dass der Wagen einen Handgriff aufweist, um das Absaugelement manuell entlang der Saugkammer zu verschieben. Zusätzlich und/oder alternativ kann die Erfindung mit umfassen, dass der Wagen über einen Antrieb, insbesondere einen elektrischen Antrieb bewegbar ist.

In Abhängigkeit von der Produktionsmaschine kann es vorteilhaft sein, dass eine Vielzahl an Absaugelemente an der Saugkammer angeordnet sind. Die Absaugelemente können variabel in ihrer Position zur Saugkammer eingestellt werden.

Vorteilhafterweise kann das Absaugelement demontierbar an der Saugkammer befestigt sein. Dieses hat den Vorteil, dass bei Wartungsarbeiten das Absaugelement ohne große Montagezeiten von der Saugkammer losgelöst und demontiert werden kann.

Vorteilhafterweise kann die Saugkammer in ihrem Querschnitt eine rechteckige Form aufweisen. Es hat sich gezeigt, dass die Saugkammer über die rechteckige Querschnittsform weiter optimierbar ist, wodurch in ihrem Inneren eine relativ konstante Strömungsgeschwindigkeit herrscht und Gebiete erhöhten Unterdrucks und Wirbel vermieden werden, die ansonsten eine Ansammlung von Abfallprodukten innerhalb der Saugkammer entstehen lassen würden, wodurch die Verstopfungsneigung sich erhöhen würde.

Zudem kann die Erfindung mit umfassen, dass der Einlassbereich des Absaugelementes einen rechteckigen Querschnitt aufweist, wobei insbesondere das sich vom Einlassbereich erstreckende Rohr einen kreisförmigen Querschnitt aufweist. Vorteilhafterweise hat sich gezeigt, dass die anfallenden Abfallprodukte im Absaugraum gerade in das jeweilige Absaugelement hineinströmen und keine Verdrehungen der Abfallprodukte auftreten. Dieses hat zur Folge, dass die Abfallprodukte im Wesentlichen während des Absaugens in der Mitte des Absaugelementes gehalten werden und verhindert wird, dass die Absaugelemente an der Innenwandung innerhalb des Absaugelementes sich anlegen und möglicherweise dort verbleiben, was mit einer Verstopfung verbunden wäre.

Bei der Produktionsmaschine kann es sich um eine Maschine zur Herstellung von flexiblen Verpackungen handeln. Denkbar ist, dass die Produktionsmaschine eines der folgenden Maschinen ist: Blas- und Gießfolienanlage, Flexo- und Tiefdruckmaschine, Maschine für die Veredelung und Verarbeitung von Papier, Folien und Kunststoffgeweben, Verpackungsmaschine. In derartigen Produktionsmaschinen kommt es in der Regel vor, dass die herzustellenden flexiblen Verpackungen über Schneideeinrichtungen beschnitten werden müssen. Hier entstehen Abfallprodukte, die durch die erfindungsgemäße Vorrichtung absaugbar sind. Es hat sich gezeigt, dass die erfindungsgemäße Vorrichtung sich besonders bei Maschinen eignet, die Folien herstellen. Die erfindungsgemäße Absaugvorrichtung ist in der Lage, die Produktionsrückstände (=Abfallprodukte) wirkungsvoll von der produzierenden Maschine zu entfernen. Die Abfallprodukte können vorteilhafterweise fortlaufend zu einer Abfallsammelstelle befördert werden. Da die Abfallprodukte in ihrer Oberflächenbeschaffenheit variieren können, insbesondere klebrig oder stumpf oder glatt sein können, ist es erforderlich, dass eine optimale Strömung innerhalb der Saugkammer sowie innerhalb der Absaugelemente durch die erfindungsgemäße Vorrichtung erzielt wird. Dieses wird durch die oben bereits beschriebenen Maßnahmen erreicht, sodass eine zuverlässige Absaugung des Absaugraumes erzielt wird, ohne dass die Abfallprodukte innerhalb der Saugkammer oder in den Absaugelementen eine Verstopfung verursachen.

Zudem wird die oben genannte Aufgabe der Erfindung durch eine Produktionsmaschine mit einer Vorrichtung zum Absaugen von Abfallprodukten gelöst, wobei die Vorrichtung folgende Merkmale aufweist:
- eine Saugkammer, an der mindestens ein Absaugelement angeordnet ist, das in einen außerhalb der Saugkammer sich befindenden Absaugraum sich erstreckt, um Abfallprodukte in die Saugkammer zu befördern,
- eine Saugeinheit, um einen Unterdruck in der Saugkammer entstehen zu lassen,
wobei ein Abdichtmittel, das am Absaugelement anliegt und die Saugkammer verschließt, derart ausgeführt ist, dass das Absaugelement entlang des Abdichtmittels bewegbar ist, wodurch die Position des Absaugelements an der Saugkammer variabel einstellbar ist.

Es hat sich gezeigt, dass die Integration der erfindungsgemäßen Vorrichtung in eine bestehende Produktionsmaschine sehr wichtig ist, wobei die Position der Absaugvorrichtung so zu wählen ist, dass keine anderen Bedienelemente gestört oder verdeckt werden. Zudem muss sichergestellt werden, dass eine zuverlässige Absaugung der Abfallprodukte, die in der Produktionsmaschine anfallen, gewährleistet ist. Hierzu kann ein Positionierungsantrieb vorgesehen sein, der eine horizontale und/oder vertikale Positionsverschiebung der erfindungsgemäßen Absaugvorrichtung an der Produktionsmaschine ermöglicht.

Weitere Vorteile, Merkmale und Einzelheiten der Erfindung ergeben sich aus der nachfolgenden Beschreibung, in der unter Bezugnahme auf die Zeichnungen Ausführungsbeispiele der Erfindung im Einzelnen beschrieben sind. Dabei können die in den Ansprüchen und in der Beschreibung erwähnten Merkmale jeweils einzeln für sich oder in beliebiger Kombination erfindungswesentlich sein. Es zeigen:
- Fig. 1: eine rein schematische Darstellung einer Produktionsmaschine mit einer Absaugvorrichtung,
- Fig. 2: eine mögliche Ausführungsform einer Absaugvorrichtung, die gemäß Figur 1 einsetzbar ist,
- Fig. 3: eine Seitenansicht der Figur 2,
- Fig. 4: eine Draufsicht der Vorrichtung gemäß Figur 2,
- Fig. 5: ein Absaugelement der Absaugvorrichtung gemäß Figur 3 in vergrößerter Darstellung,
- Fig. 6: eine weitere Darstellung des Absaugelementes gemäß Figur 5,
- Fig. 7: eine schematische Darstellung eines Teilbereiches der Absaugvorrichtung mit einem Absaugelement, an dem ein Abdichtmittel anliegt,
- Fig. 8: eine weitere Alternative hinsichtlich des Abdichtmittels,
- Fig. 9: eine weitere Ausführungsform eines möglichen Abdichtmittels in der Absaugvorrichtung,
- Fig. 10: ein noch weiteres Ausführungsbeispiel eines möglichen Abdichtmittels, das in einer Absaugvorrichtung zum Einsatz kommt,
- Fig. 11: eine weitere Alternative eines möglichen Abdichtmittels, das in der Absaugvorrichtung zum Einsatz kommt,
- Fig. 12: eine alternative Ausführungsform eines Abdichtmittels in einer Absaugvorrichtung,
- Fig. 13: ein noch weiteres Ausführungsbeispiel eines Abdichtmittels in einer Absaugvorrichtung,
- Fig. 14: ein weiteres Ausführungsbeispiel eines Abdichtmittels in einer Absaugvorrichtung,
- Fig. 15: eine schematische Darstellung einer Saugkammer der Absaugvorrichtung,
- Fig. 16: eine weitere Alternative bezogen auf die geometrische Gestalt der Saugkammer der Absaugvorrichtung und
- Fig. 17: eine mögliche Ausführungsform eines Absaugelementes einer Absaugvorrichtung.

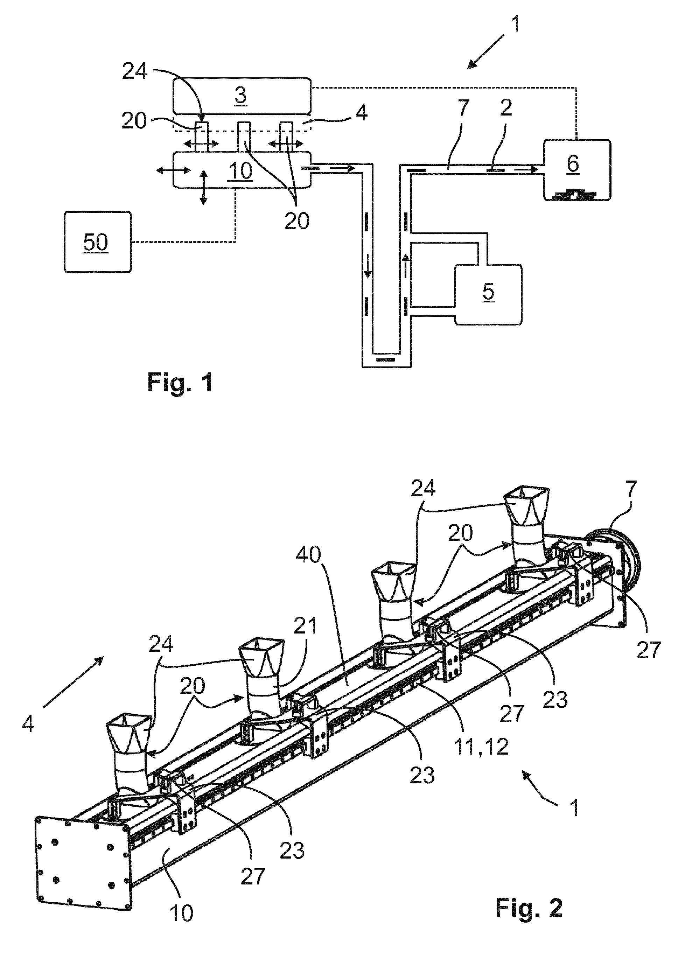

Figur 1 zeigt eine Vorrichtung 1 zum Absaugen von Abfallprodukten 2 einer Produktionsmaschine 3. Die Produktionsmaschine 3 kann eine Maschine zur Herstellung von flexiblen Verpackungen sein, in der während der Produktion Abfallprodukte 2 anfallen, die aus der Produktionsmaschine 3 zu entfernen sind, da sonst etwaige Störungen während der Produktion bzw. während des Betriebes der Produktionsmaschine 3 entstehen könnten. Bei der Produktionsmaschine 3 kann es sich um eine Blas- und Gießfolienanlage, Flexo- und Tiefdruckmaschine um eine Maschine für die Veredelung, und Verarbeitung von Papier, Folien und Kunststoffgeweben oder um eine Verpackungsmaschine handeln. Die Abfallprodukte 2 können aus Kunststoff oder Papier bestehen. Hierbei kann die Oberflächenbeschaffenheit dieser Abfallstoffe 2 variieren. Beispielsweise ist es denkbar, dass die Abfallprodukte 2 klebrig und/oder stumpf und/oder glatt sind.

Um diese Abfallprodukte 2 zielgerichtet aus dem Bereich der Produktionsmaschine 3 abzuführen, ist eine Vorrichtung 1 zum Absaugen dieser Abfallprodukte 2 vorgesehen, die mit einer Vielzahl an Absaugelementen 20 in einen Absaugraum 4 der Produktionsmaschine 3 hineinragt. Es ist eine Saugeinheit 5 vorgesehen, die einen Unterdruck innerhalb einer Saugkammer 10 entstehen lässt, die mit den Saugelementen 20 strömungstechnisch verbunden ist. Aufgrund des entstehenden Unterdrucks in der Saugkammer 10 können wirkungsvoll anfallende Abfallprodukte 2 im Absaugraum 4 abgesaugt werden. Die Saugkammer 10 ist mit einem Rohrsystem 7 verbunden, dass mit dem Gebläse 5 kommuniziert. Zudem ist ein Auffangbehältnis 6 vorgesehen, in dem die Abfallprodukte 2 aufgefangen werden. Beispielsweise ist es denkbar, die im Auffangbehältnis 6 aufgefangenen Abfallprodukte 2 automatisch dem Produktionsprozess der Produktionsmaschine 3 zurückzuführen, welches schematisch mit einem gestrichelten Pfeil gemäß Figur 1 angedeutet ist.

Zudem ist ein Positionierungsantrieb 50 in mechanischer Wirkverbindung mit der Vorrichtung 1, insbesondere mit der Saugkammer 10, um eine optimale Position an der Produktionsmaschine 3 zu erzielen. Der Positionierungsantrieb 50 ist in der Lage, die Vorrichtung 1 horizontal und/oder vertikal an der Produktionsmaschine 3 auszurichten und die einzelnen Absaugelemente 20 an die gewünschte Position zu schieben.

Die erfindungsgemäße Vorrichtung 1 bietet die Möglichkeit, eine Vielzahl an Absaugelementen 20 an der Saugkammer 10 anzuordnen, um individuell für jede mögliche Produktionsmaschine 3 eine optimale Absaugung der anfallenden Abfallprodukte 2 zu erzielen. Gemäß Figur 2 bis Figur 4 sind beispielhaft vier Absaugelemente 20 vorgesehen. Eine Besonderheit der Absaugelemente 20 gemäß sämtlicher Ausführungsbeispiele ist, dass jedes Absaugelement 20 relativ zur Saugkammer 10 verschiebbar ist. Das bedeutet, dass das Absaugelement 20 entlang der Saugkammer 10 bewegt werden kann.

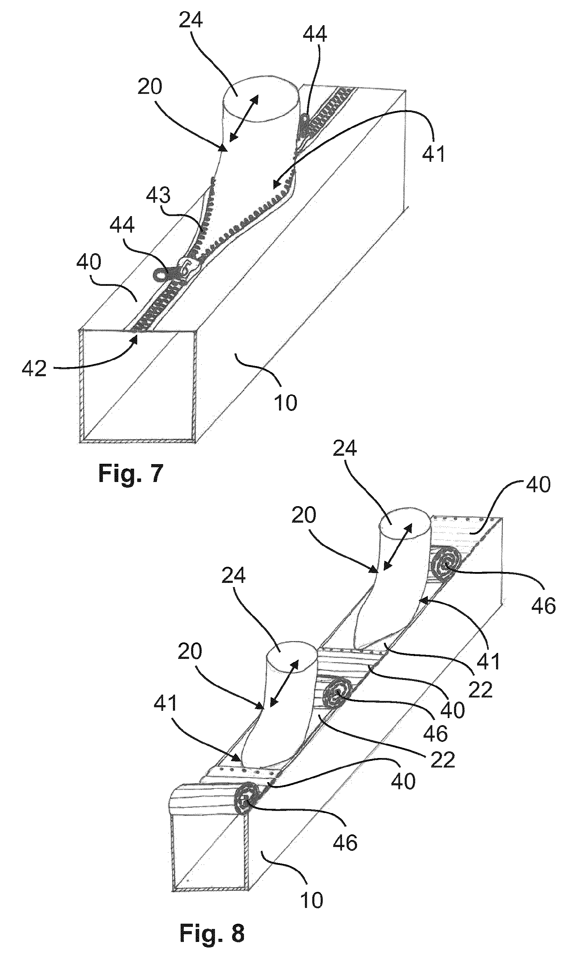

Damit sich ein definierter Unterdruck innerhalb der Saugkammer 10 einstellt, ist ein Abdichtmittel 40 vorgesehen, welches im Wesentlichen die Saugkammer 10 vom Außenbereich verschließt. Das Abdichtmittel 40 weist lediglich im Bereich des jeweiligen Absaugelementes 20 eine Öffnung 41 auf, sodass zumindest teilweise das Absaugelement 20 sich durch die Öffnung 41 des Abdichtmittels 40 erstreckt. Bedienerfreundlich lässt sich jedes Absaugelement 20 entlang des Abdichtmittels 40 verschieben, wobei während der Bewegung des Absaugelementes 20 die Position der Öffnung 41 des Abdichtmittels 40 sich mitbewegt. Hierbei sind unterschiedliche Ausführungsformen des Abdichtmittels 40 denkbar, die gemäß Figur 7 bis Figur 14 dargestellt sind.

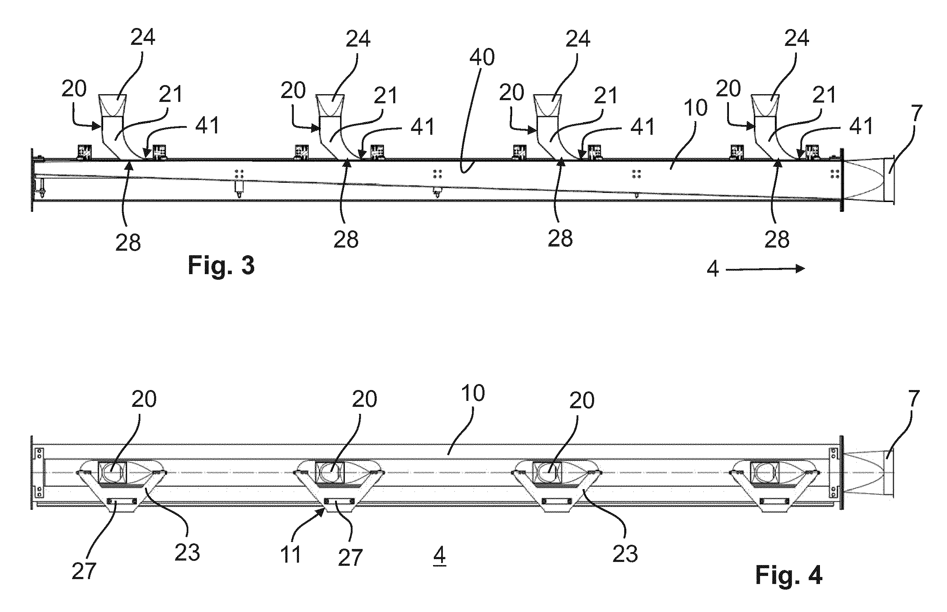

Das Abdichtmittel 40 weist gemäß Figur 7 einen Reißverschluss 43 auf, der bei einer Bewegung des Absaugelementes 20 sich automatisch öffnet bzw. schließt. Hierbei weist das Absaugelement 20 einen Wagen 23 auf, der beispielhaft in Figur 2 und Figur 4 dargestellt ist. Die Saugkammer 10 weist eine Lagerung 11 auf, an der das Absaugelement 20 bewegbar gelagert ist. Im dargestellten Ausführungsbeispiel ist die Lagerung 11 als Schienensystem ausgeführt. Der Wagen 23 greift am Schienensystem 11 an, das außerhalb der Saugkammer 10 angeordnet ist. Zudem verfügt der Wagen 23 über ein nicht explizit dargestelltes Verbindungselement, welches den Wagen 23 mit dem Reißverschlussöffner 44 verbindet. Über eine Bewegung des Wagens 23 wird gleichzeitig der Reißverschlussöffner 44 geöffnet bzw. geschlossen. Vorteilhafterweise kann ein luftdichter Reißverschluss 43 zum Einsatz kommen. Das Schienensystem 11 umfasst ferner ein Schienenelement 12, an dem der Wagen 23 gelagert ist und sicher verfahren werden kann. Das Schienenelement 12 ist an der Saugkammer 10 außenseitig angeordnet.

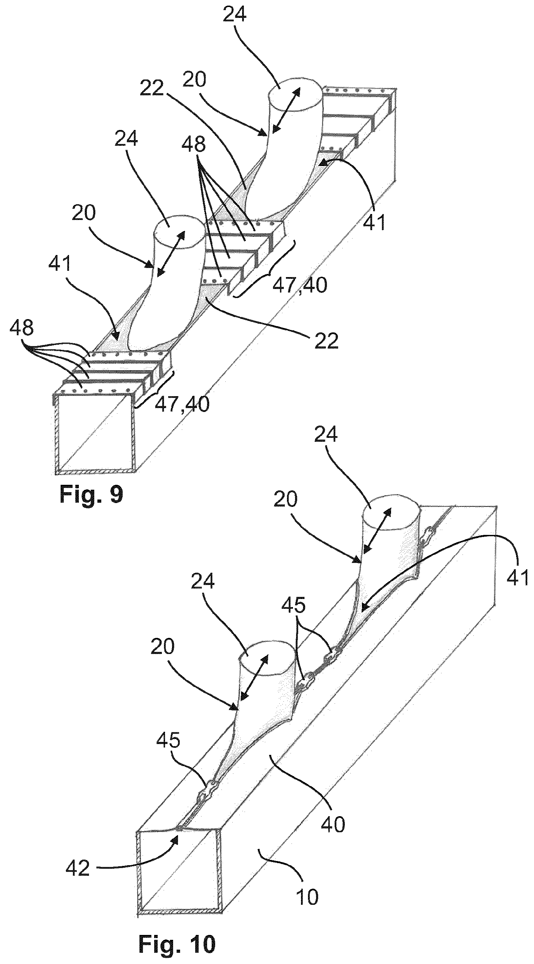

Das Ausführungsbeispiel gemäß Figur 10 arbeitet nach dem gleichen Prinzip wie Figur 7, wobei im Gegensatz zu Figur 7 das Abdichtmittel 40 einen Zip-Verschluss 45 aufweist.

In Figur 8 weist das Abdichtmittel 40 mehrere Rollodichtungen auf, die um eine Achse 46 aufrollbar oder abrollbar sind, wenn das Absaugelement 20 in seiner Position entlang der Saugkammer 10 verfahren wird.

In Figur 9 umfasst das Abdichtmittel 40 mehrere Teleskopeinheiten 47, die jeweils sich aus mehreren Teleskopelementen 48 zusammensetzen, die ineinander verschiebbar sind. Auch hier erfolgt die Verschiebung der einzelnen Teleskopelemente 48 durch eine entsprechende Bewegung der Absaugelemente 20 entlang der Erstreckung der Saugkammer 10.

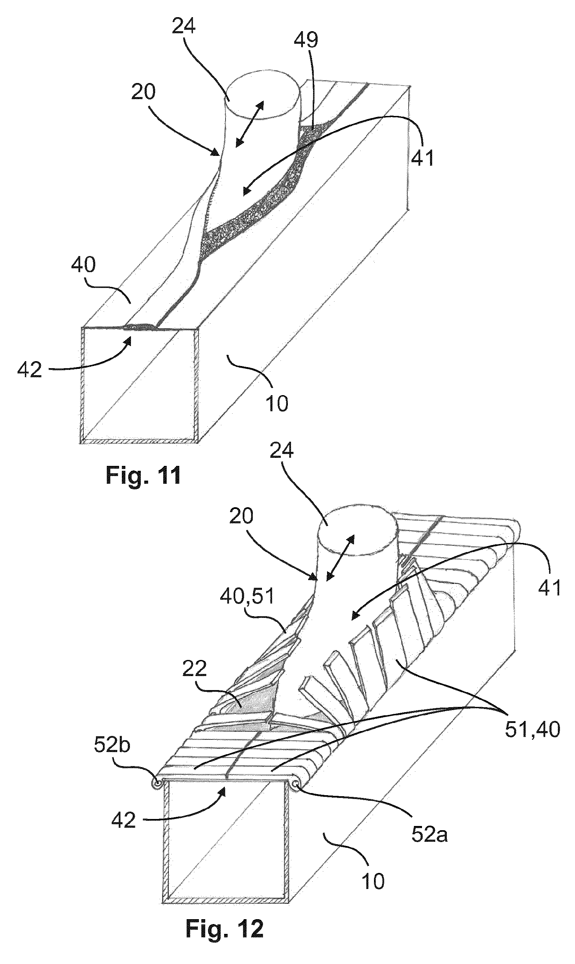

Gemäß Figur 11 ist ein Abdichtmittel 40 dargestellt, welches einen Klettverschluss 49 aufweist, der durch eine Bewegung des Absaugelementes 20 geöffnet wird, wobei der Klettverschluss 49 sich automatisch wieder schließt.

Figur 12 zeigt ein Abdichtmittel 40 mit einer Vielzahl an Klappsegmenten 51, die benachbart und gegenüberstehend zueinander angeordnet sind. Jedes Klappsegment 51 kann um eine Achse 52a, 52b verschwenkt werden, und zwar dann, wenn das Absaugelement 20 aufgrund seiner Kontur das Klappsegment 51 aus der eingeklappten Stellung (Ruhestellung) in eine ausgeklappte Stellung verschwenkt. Wenn das Absaugelement 20 nicht mehr am Klappsegment 51 angreift, bewegt sich das Klappsegment 51 wieder in seine Ruhestellung.

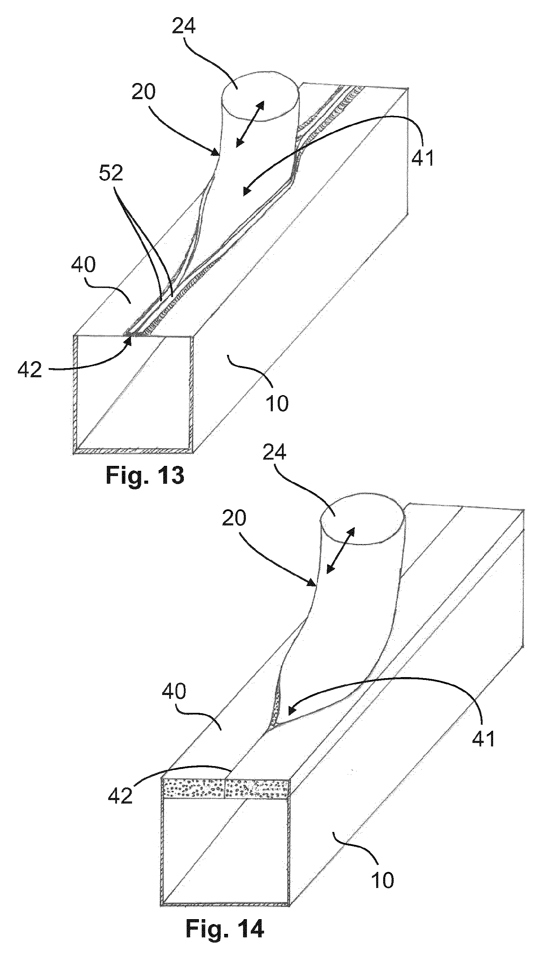

In Figur 13 ist das Abdichtmittel 40 mit Magnetbändern 52 ausgeführt, die bei einer Bewegung des Absaugelementes 20 sich öffnen und somit eine Öffnung 41 für das Absaugelement 20 bereitstellen. Wie auch in den zuvor beschriebenen Ausführungsbeispielen erfolgt eine automatische Schließung der Öffnung 41 durch das Abdichtmittel 40, in dem die Magnetbänder 52 wieder aufeinander wirken, sodass eine zuverlässige Abdichtung der Saugkammer 10 gewährleistet ist.

In Figur 14 ist das Abdichtmittel 40 als Profildichtung ausgebildet, die in Abhängigkeit von der Position des Absaugelementes 20 sich öffnet oder wieder automatisch sich verschließt.

Bis auf das Ausführungsbeispiel gemäß Figur 8 und Figur 9, weisen die Ausführungsbeispiele gemäß Figur 7, Figur 10 bis Figur 14 eine Naht 42 auf, die über eine Bewegung des Absaugelementes 20 geöffnet und verschlossen wird. Hierbei ragt das Absaugelement 20 stets durch eine Öffnung 41 des Abdichtmittels 40.

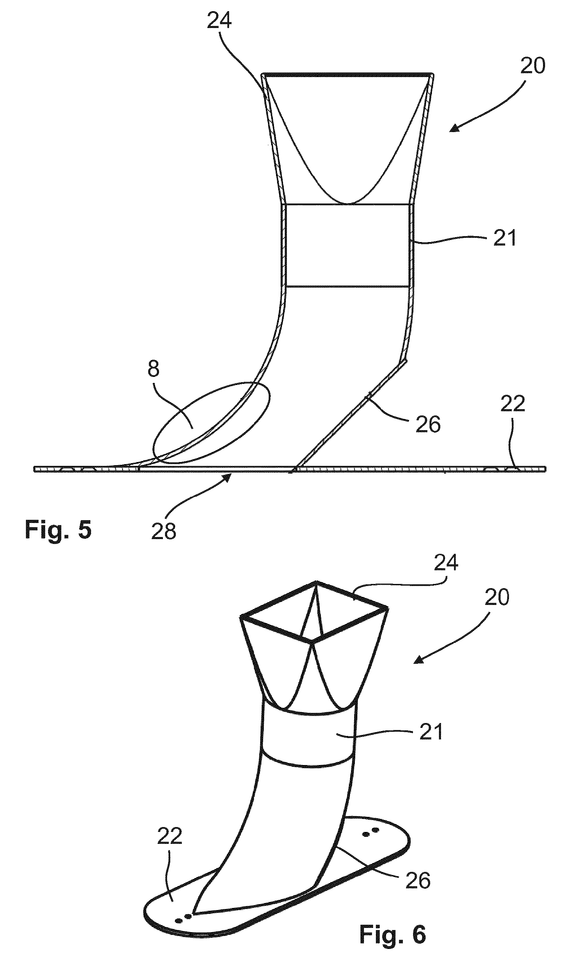

Damit eine zuverlässige Abdichtung der Saugkammer 20 während des Betriebes der Vorrichtung 1 vorliegt, wird der Bereich der Öffnung 41 durch einen Fuß 22 des Absaugelementes 20 zusätzlich abgedeckt. Der Fuß 22 kann gleichzeitig als Führung innerhalb der Saugkammer 10 dienen, damit eine zuverlässige Positionsverschiebung des Absaugelementes 20 gewährleistet ist. Der Fuß 22 liegt unmittelbar unterhalb des Abdichtmittels 40, insbesondere unterhalb der Naht 42, wobei gleichzeitig die sich bildende Öffnung 41 zuverlässig durch den Fuß 22 innenseitig abdeckt ist. Diese Ausführungsform des Fußes 22 gemäß Figur 5 und Figur 6 ist in sämtlichen Ausführungsbeispielen anwendbar.

Zudem weist das Absaugelement 20 ein gekrümmtes Rohr 21 auf, wobei das Absaugelement 20 einen Einlassbereich 24, der in den Absaugraum 4 hineinragt, und einen Auslassbereich 28 umfasst, der in Richtung Saugkammer 10 gerichtet ist und dort mündet, wobei der Auslassbereich 28 tangential zur Saugkammer 10 gerichtet ist (Figur 5).

Gemäß Figur 5 weist das Absaugelement 20 eine Wandung 26 auf, die im Fersenbereich des gekrümmten Absaugelementes 20 angeordnet ist. Die Wandung 26 dient dazu, dass eine entsprechende Strömungsgeschwindigkeit und entsprechende Unterdruckverhältnisse innerhalb des Absaugelementes 20 entstehen, die einer möglichen Verstopfung des Absaugelementes 20 mit Abfallprodukten 2 entgegenwirken. Die Wandung 26 dient zur Erhöhung des Strömungswiderstandes oberhalb der Wandung 26, wobei gleichzeitig wirksam verhindert wird, dass im gezeigten Bereich 8 gemäß Figur 5 sich ein schädliches Unterdruckverhältnis einstellt, was nachteiligerweise Verstopfungen entstehen lassen könnte. Das Leitblech 26 beeinflusst die Strömung innerhalb des Absaugelementes 20, sodass die Abfallprodukte 2 nahezu mittig durch das Rohr 21 sowie durch den Auslassbereich 28 in die Saugkammer 10 gelangen können. Das Leitblech 26 ist schräg zur Öffnung 41 des Einlassbereiches 24 geneigt. Zudem weist der Einlassbereich 24 des Absaugelementes 20 gemäß Figur 5 und Figur 6 einen rechteckigen Querschnitt auf, wobei das Rohr 21, das sich dem Einlassbereich 24 anschließt, einen kreisförmigen Querschnitt aufweist. Insbesondere die soeben beschriebene Ausgestaltung des Einlassbereiches 24 begünstigt zusätzlich einen günstigen Eintritt der Abfallprodukte 2 in das Absaugelement 20.

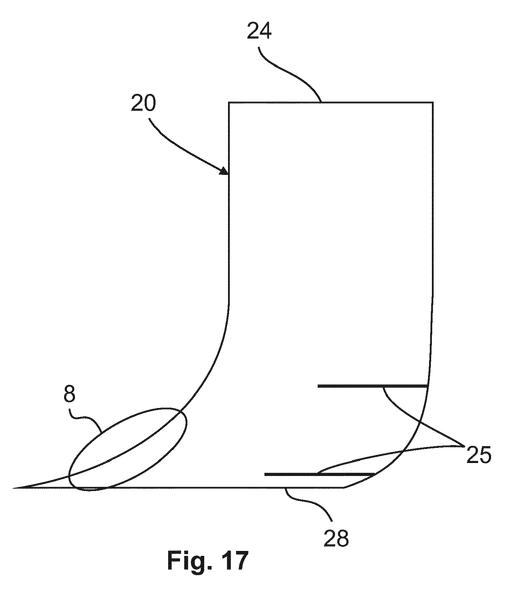

Gemäß Figur 17 ist eine weitere Möglichkeit gezeigt, um die Strömung innerhalb des Absaugelementes 20 zu beeinflussen, wobei eine oder mehrere Blenden 25 als Wandung innerhalb des Absaugelementes 20 angeordnet ist/sind, die im Bereich 8, wie bereits in Figur 5 beschrieben, einen während des Betriebes entstehenden Unterdruck entgegenwirken. Oberhalb der Blende 25 entsteht ein Staudruck, wodurch auf positive Weise die Strömung innerhalb des Absaugelementes 20 für die einfallenden Abfallprodukte 2 beeinflusst wird. Auch in diesem Ausführungsbeispiel strömen die Abfallprodukte 2 im Wesentlichen mittig durch das Absaugelement 20, insbesondere durch den Auslassbereich 28, wodurch einer möglichen Verstopfung des Absaugelementes 20 innerhalb des Absaugvorganges entgegengewirkt wird.

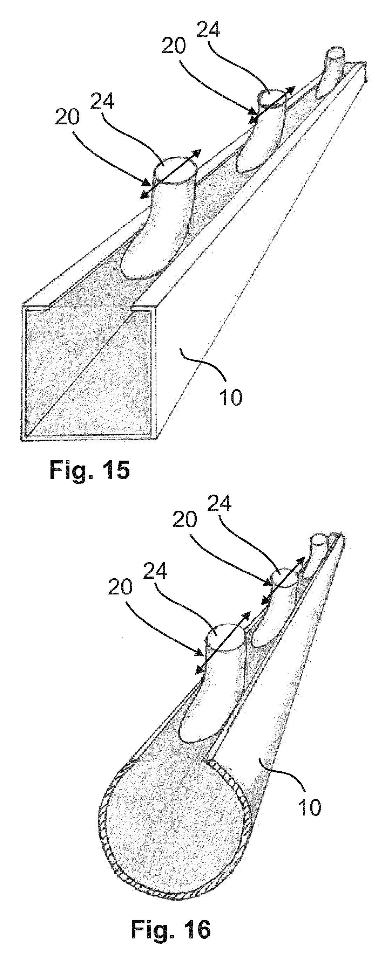

Gemäß Figur 16 ist gezeigt, dass die Saugkammer 10 einen runden Querschnitt aufweisen kann. In den restlichen Ausführungsbeispielen weist die Saugkammer 10 einen rechteckigen Querschnitt auf. Damit sich ein zufriedenstellender Unterdruck während des Betriebes innerhalb der Saugkammer 10 einstellt, weist die Saugkammer 10 einen sich verjüngenden Verlauf in ihrem Querschnitt auf, der in diesem Zusammenhang auch als konisch bezeichnet werden kann. Der Querschnitt der Saugkammer 10 an der der Saugeinheit 5 zugewandten Seite ist größer als der Querschnitt an der der Saugeinheit 5 abgewandten Seite. Hierdurch wird bezweckt, dass nahezu sämtliche Absaugelemente 20, die in Reihe geschaltet sind, die gleiche "Saugleistung" aufweisen. Der Wagen 23 gemäß Figur 2 und Figur 4 weist einen Handgriff 27 auf, sodass manuell die Position des Absaugelementes 20 im Absaugraum 4 einstellbar ist. Die Position des Wagens 23 lässt sich über eine nicht explizit dargestellte Arretiervorrichtung arretieren. Ebenfalls kann vorgesehen sein, dass ein Antrieb, der explizit nicht gezeigt ist, die Position des Wagens 23 einstellt.

### Bezugszeichenliste

- 1: Vorrichtung
- 2: Abfallprodukt
- 3: Produktionsmaschine
- 4: Absaugraum
- 5: Saugeinheit
- 6: Auffangbehältnis
- 7: Rohrsystem
- 8: Bereich

- 10: Saugkammer
- 11: Lagerung
- 12: Schienenelement

- 20: Absaugelement
- 21: Rohr
- 22: Fuß
- 23: Wagen
- 24: Einlassbereich
- 25: Wandung, Wiederstandselement, Blende
- 26: Leitblech
- 27: Handgriff
- 28: Auslassbereich

- 40: Abdichtmittel
- 41: Öffnung
- 42: Naht
- 43: Reißverschluss
- 44: Reißverschlussöffner
- 45: Zip-Verschluss
- 46: Achse
- 47: Teleskopeinheit
- 48: Teleskopelement
- 49: Klettverschluss
- 50: Positionierungsantrieb
- 51: Klappsegment
- 52: Magnetband

## Patentansprüche

1. Vorrichtung (1) zum Absaugen von Abfallprodukten (2) einer Produktionsmaschine (3), insbesondere einer Folienextrusionsmaschine, mit
einer Saugkammer (10), an der mindestens ein Absaugelement (20) angeordnet ist, das in einen außerhalb der Saugkammer (10) sich befindenden Absaugraum (4) sich erstrecken, um Abfallprodukte (2) in die Saugkammer (10) zu befördern,
einer Saugeinheit (5), um einen Unterdruck in der Saugkammer (10) entstehen zu lassen,
**dadurch gekennzeichnet,**
**dass** ein Abdichtmittel (40), das am Absaugelement (20) anliegt und die Saugkammer (10) verschließt, derart ausgeführt ist, dass das Absaugelement (20) entlang des Abdichtmittels (40) bewegbar ist, wodurch die Position des Absaugelements (20) an der Saugkammer (10) variabel einstellbar ist, wobei das Abdichtmittel (40) eine Öffnung (41) für das Absaugelement (20) aufweist, so dass zumindest teilweise das Absaugelement (20) sich durch die Öffnung (41) des Abdichtmittels (40) erstreckt, wobei das Absaugelement (20) entlang des Abdichtmittels (40) verschiebbar ist, wobei während der Bewegung des Absaugelementes (20) die Position der Öffnung (41) des Abdichtmittels (40) sich mitbewegt.

2. Vorrichtung (1) nach Anspruch 1,
**dadurch gekennzeichnet,**
**dass** die Saugkammer (10) eine Lagerung (11) aufweist, an der das Absaugelement (20) bewegbar gelagert ist, insbesondere dass die Lagerung (11) als Schienensystem ausgeführt ist.

3. Vorrichtung (1) nach einem der vorhergehenden Ansprüchen,
**dadurch gekennzeichnet,**
**dass** das Abdichtmittel (40) eine Naht (42) aufweist, die während der Bewegung des Absaugelementes (20) sich an definierten Stellen öffnet und gleichzeitig an definierten Stellen schließt.

4. Vorrichtung (1) nach einem der vorhergehenden Ansprüchen,
**dadurch gekennzeichnet,**
**dass** das Abdichtmittel (40) mindestens ein der folgenden Merkmale aufweist:
- eine Rollodichtung
- eine Profildichtung
- einen Reißverschluss
- Teleskopelemente
- Zip-Verschluss
- Klappsegmente
- Magnetbänder
- Klettverschluss

5. Vorrichtung (1) nach einem der vorhergehenden Ansprüchen,
**dadurch gekennzeichnet,**
**dass** die Saugkammer (10) einen sich verjüngenden Verlauf in ihrem Querschnitt aufweist, wobei der Querschnitt der Saugkammer (10) an der der Saugeinheit (5) zugewandten Seite größer ist als der Querschnitt an der der Saugeinheit (5) abgewandten Seite.

6. Vorrichtung (1) nach einem der vorhergehenden Ansprüchen,
**dadurch gekennzeichnet,**
**dass** das Absaugelement (20) ein Rohr (21) und einen Fuß (22) aufweist, wobei das Absaugelement (20) im Wesentlichen außerhalb der Saugkammer (10) sich befindet und der Fuß (22) unterhalb des Abdichtmittels (40) innerhalb der Saugkammer (10) angeordnet ist, wobei insbesondere der Fuß (22) plan ausgebildet ist und innenseitig der Saugkammer (10) am Abdichtmittel (40) anliegt.

7. Vorrichtung (1) nach einem der vorhergehenden Ansprüchen,
**dadurch gekennzeichnet,**
**dass** das Absaugelement (20) einen Wagen (23) aufweist, der an der Lagerung (11), die außerhalb der Saugkammer (10) angeordnet ist, angreift.

8. Vorrichtung (1) nach einem der vorhergehenden Ansprüchen,
**dadurch gekennzeichnet,**
**dass** das Absaugelement (20) einen Einlassbereich (24), das in den Absaugraum (4) hineinragt, und einen Auslassbereich (28) aufweist, der in Richtung Saugkammer (10) gerichtet ist, wobei insbesondere der Auslassbereich (28) tangential zur Saugkammer (10) gerichtet ist.

9. Vorrichtung (1) nach einem der vorhergehenden Ansprüchen,
**dadurch gekennzeichnet,**
**dass** das Absaugelement (20) einen gekrümmten Verlauf aufweist, wobei zumindest eine Wandung (25) derart innerhalb des Absaugelementes (20) vorgesehen ist, dass ein Strömungswiderstand an der Wandung (25) entsteht, der dafür sorgt, dass ein Verbleiben von Abfallprodukten (2) innerhalb des Absaugelementes (20) vermieden wird, wobei insbesondere die Wandung als Leitblech (26) ausgebildet ist, das die geometrische Kontur des Absaugelementes (20) zumindest bereichsweise beeinflusst, insbesondere dass das Leitblech (26) schräg zur Öffnung des Einlassbereiches (24) geneigt ist.

10. Vorrichtung (1) nach einem der vorhergehenden Ansprüchen,
**dadurch gekennzeichnet,**
**dass** die Lagerung (11) ein Schienenelement (12) umfasst, wodurch insbesondere das Absaugelement (20) linear verschiebbar ist.

11. Vorrichtung (1) nach einem der vorhergehenden Ansprüchen,
**dadurch gekennzeichnet,**
**dass** der Wagen (23) einen Handgriff (27) aufweist, um das Absaugelement (20) manuell entlang der Saugkammer (10) zu verschieben und/oder dass der Wagen (23) über einen Antrieb, insbesondere einen elektrischen Antrieb bewegbar ist.

12. Vorrichtung (1) nach einem der vorhergehenden Ansprüchen,
**dadurch gekennzeichnet,**
**dass** eine Vielzahl an Absaugelemente (20) an der Saugkammer (10) angeordnet sind und/oder dass das Absaugelement (20) demontierbar an der Saugkammer (10) befestigt ist.

13. Vorrichtung (1) nach einem der vorhergehenden Ansprüchen,
**dadurch gekennzeichnet,**
**dass** die Saugkammer (10) in ihrem Querschnitt eine rechteckige Form aufweist und/oder dass der Einlassbereich (24) des Absaugelementes (20) einen rechteckigen Querschnitt aufweist, wobei insbesondere das sich vom Einlassbereich (24) erstreckende Rohr (21) einen kreisförmigen Querschnitt aufweist.

14. Produktionsmaschine (3) mit einer Vorrichtung (1) zum Absaugen von Abfallprodukten (2), insbesondere gemäß einem der vorhergehenden Ansprüche 1 bis 13, wobei die Vorrichtung (1) folgende Merkmale aufweist:
eine Saugkammer (10), an der mindestens ein Absaugelement (20) angeordnet ist, das in einen außerhalb der Saugkammer (10) sich befindenden Absaugraum (4) sich erstrecken, um Abfallprodukte (2) in die Saugkammer (10) zu befördern,
eine Saugeinheit (5), um einen Unterdruck in der Saugkammer (10) entstehen zu lassen,
**dadurch gekennzeichnet,**
**dass** ein Abdichtmittel (40), das am Absaugelement (20) anliegt und die Saugkammer (10) verschließt, derart ausgeführt ist, dass das Absaugelement (20) entlang des Abdichtmittels (40) bewegbar ist, wodurch die Position des Absaugelements (20) an der Saugkammer (10) variabel einstellbar ist, wobei das Abdichtmittel (40) eine Öffnung (41) für das Absaugelement (20) aufweist, so dass zumindest teilweise das Absaugelement (20) sich durch die Öffnung (41) des Abdichtmittels (40) erstreckt wobei das Absaugelement (20) entlang des Abdichtmittels (40) verschiebbar ist, wobei während der Bewegung des Absaugelementes (20) die Position der Öffnung (41) des Abdichtmittels (40) sich mitbewegt.

15. Produktionsmaschine (3) nach einem der vorhergehenden Ansprüchen,
**dadurch gekennzeichnet,**
**dass** ein Positionierungsantrieb (50) vorgesehen ist, der eine horizontale und/oder vertikale Verschiebung der Vorrichtung (1) an der Produktionsmaschine (3) ermöglicht.

## Claims

1. Device (1) for suctioning off waste products (2) of a production machine (3), in particular a film extrusion machine, having
a suction chamber (10) on which at least one suctioning element (20) is arranged, which extends into a suctioning space (4) located outside the suction chamber (10), in order to deliver waste products (2) into the suction chamber (10),
a suction unit (5) for bringing about a negative pressure in the suction chamber (10),
**characterized**
**in that** a sealing means (40) which bears against the suctioning element (20) and closes off the suction chamber (10) is embodied such that the suctioning element (20) is movable along the sealing means (40), with the result that the position of the suctioning element (20) on the suction chamber (10) is settable in a variable manner, wherein the sealing means (40) has an opening (41) for the suctioning element (20), such that the suctioning element (20) extends at least in part through the opening (41) in the sealing means (40), wherein the suctioning element (20) is displaceable along the sealing means (40), wherein, during the movement of the suctioning element (20), the position of the opening (41) in the sealing means (40) travels along therewith.

2. Device (1.) according to Claim 1,
**characterized**
**in that** the suction chamber (10) has a mount (11) on which the suctioning element (20) is mounted in a movable manner, in particular in that the mount (11) is embodied as a rail system.

3. Device (1) according to either of the preceding claims,
**characterized**
**in that** the sealing means (40) has a seam (42) which, during the movement of the suctioning element (20), opens at defined locations and simultaneously closes at defined locations.

4. Device (1) according to one of the preceding claims,
**characterized**
**in that** the sealing means (40) has at least one of the following features:
- a shutter seal
- a profile seal
- a zip fastener
- telescopic elements
- a zip lock
- flapping segments
- magnetic strips
- touch-and-close fastener.

5. Device (1) according to one of the preceding claims,
**characterized**
**in that** the suction chamber (10) has a narrowing profile in cross section, wherein the cross section of the suction chamber (10) on the side facing the suction unit (5) is larger than the cross section on the side away from the suction uni t (5).

6. Device (1) according to one of the preceding claims,
**characterized**
**in that** the suctioning element (20) has a tube (21) and a base (22), wherein the suctioning element (20) is located substantially outside the suction chamber (10) and the base (22) is arranged beneath the sealing means (40) inside the suction chamber (10), wherein in particular the base (22) is configured in a flat manner and bears against the sealing means (40) on the inside of the suction chamber (10).

7. Device (1) according to one of the preceding claims,
**characterized**
**in that** the suctioning element (20) has a carriage (23) which acts on the mount (12), which is arranged outside the suction chamber (10).

8. Device (1) according to one of the preceding claims,
**characterized**
**in that** the suctioning element (20) has an inlet region (24) which projects into the suctioning space (4), and an outlet region (28) which is directed in the direction of the suction chamber (10), wherein in particular the outlet region (28) is directed tangentially to the suction chamber (10).

9. Device (1) according to one of the preceding claims,
**characterized**
**in that** the suctioning element (20) has a curved profile, wherein at least one wall (25) is provided inside the suctioning element (20) such that flow resistance arises at the wall (25), ensuring that waste products (2) do not remain inside the suctioning element (20), wherein in particular the wall is configured as a baffle (26) which at least regionally influences the geometrical contour of the suctioning element (20), in particular that the baffle (26) is inclined at an angle to the opening in the inlet region (24).

10. Device (1) according to one of the preceding claims,
**characterized**
**in that** the mount (11) comprises a rail element (12), as a result of which in particular the suctioning element (20) is linearly displaceable.

11. Device (1) according to one of the preceding claims,
**characterized**
**in that** the carriage (23) has a handle (27) for displacing the suctioning element (20) manually along the suction chamber (10), and/or in that the carriage (23) is movable via a drive, in particular an electric drive.

12. Device (1) according to one of the preceding claims,
**characterized**
**in that** a multiplicity of suctioning elements (20) are arranged on the suction chamber (10), and/or in that the suctioning element (20) is fastened to the suction chamber (10) in a removable manner.

13. Device (1) according to one of the preceding claims,
**characterized**
**in that** the suction chamber (10) has a rectangular shape in cross section, and/or in that the inlet region (24) of the suctioning element (20) has a rectangular cross section, wherein in particular the tube (21) extending from the inlet region (24) has a circular cross section.

14. Production machine (3) having a device (1) for suctioning off waste products (2), in particular according to one of the preceding Claims 1 to 13, wherein the device (1) has the following features:
a suction chamber (10) on which at least one suctioning element (20) is arranged, which extends into a suctioning space (4) located outside the suction chamber (10), in order to deliver waste products (2) into the suction chamber (10),
a suction unit (5) for bringing about a negative pressure in the suction chamber (10),
**characterized**
**in that** a sealing means (40) which bears against the suctioning element (20) and closes off the suction chamber (10) is embodied such that the suctioning element (20) is movable along the sealing means (40), with the result that the position of the suctioning element (20) on the suction chamber (10) is settable in a variable manner, wherein the sealing means (40) has an opening (41) for the suctioning element (20), such that the suctioning element (20) extends at least in part through the opening (41) in the sealing means (40), wherein the suctioning element (20) is displaceable along the sealing means (40), wherein, during the movement of the suctioning element (20), the position of the opening (41) in the sealing means (40) travels along therewith.

15. Production machine (3) according to one of the preceding claims,
**characterized**
**in that** a positioning drive (50) is provided which allows horizontal and/or vertical displacement of the device (1) on the production machine (3).

## Revendications

1. Dispositif (1) pour aspirer des produits de rebut (2) d'une machine de production (3), en particulier d'une machine d'extrusion de feuilles, comprenant
une chambre d'aspiration (10) au niveau de laquelle est disposé au moins un élément d'aspiratïon (20) qui s'étend dans un espace d'aspiration (4) se trouvant à l'extérieur de la chambre d'aspiration (10) pour transporter les produits de rebut (2) dans la chambre d'aspiration (10),
une unité d'aspiration (5) destinée à permettre de générer une dépression dans la chambre d'aspiration (10),
**caractérisé en ce**
**qu'**un moyen d'étanchéité (40) qui s'applique contre l'élément d'aspiration (20) et qui ferme la chambre d'aspiration (10) est réalisé de telle sorte que l'élément d'aspiration (20) puisse être déplacé le long du moyen d'étanchéité (40), de sorte que la position de l'élément d'aspiration (20) au niveau de la chambre d'aspiration (10) puisse être ajustée de manière variable, le moyen d'étanchéité (40) présentant une ouverture (41) pour l'élément d'aspiration (20), de telle sorte que l'élément d'aspiration (20) s'étende au moins en partie à travers l'ouverture (41) du moyen d'étanchéité (40), l'élément d'aspiration (20) pouvant être déplacé le long du moyen d'étanchéité (40), la position de l'ouverture (41) du moyen d'étanchéité (40) se déplaçant en même temps pendant le déplacement de l'élément d'aspiration (20) .

2. Dispositif (1) selon la revendication 1,
**caractérisé en ce que**
la chambre d'aspiration (10) présente un support sur palier (11) sur lequel est supporté de manière déplaçable l'élément d'aspiration (20), en particulier **en ce que** le support sur palier (11) est réalisé sous forme de système de rails.

3. Dispositif (1) selon l'une quelconque des revendications précédentes,
**caractérisé en ce que**
le moyen d'étanchéité (40) présente un joint (42) qui s'ouvre à des endroits définis pendant le déplacement de l'élément d'aspiration (20) et qui se ferme simultanément à des endroits définis.

4. Dispositif (1) selon l'une quelconque des revendications précédentes,
**caractérisé en ce que**
le moyen d'étanchéité (40) présente au moins l'une des caractéristiques suivantes :
- un joint d'étanchéité de volet roulant,
- un joint d'étanchéité pour profilés,
- une fermeture éclair,
- des éléments télescopiques,
- une fermeture à glissière,
- des segments rabattables,
- des bandes magnétiques,
- une fermeture à boucles et crochets.

5. Dispositif (1) selon l'une quelconque des revendications précédentes,
**caractérisé en ce que**
la chambre d'aspiration (10) présente une section transversale avec une allure allant en se rétrécissant, la section transversale de la chambre d'aspiration (10) étant supérieure au niveau du côté tourné vers l'unité d'aspiration (5) à la section transversale au niveau du côté opposé à l'unité d'aspiration (5).

6. Dispositif (1) selon l'une quelconque des revendications précédentes,
**caractérisé en ce que**
l'élément d'aspiration (20) présente un tube (21) et une base (22), l'élément d'aspiration (20) se trouvant essentiellement à l'extérieur de la chambre d'aspiration (10) et la base (22) étant disposée en dessous du moyen d'étanchéité (40) à l'intérieur de la chambre d'aspiration (10), la base (22) étant notamment réalisée sous forme plane et s'appliquant du côté intérieur de la chambre d'aspiration (10) contre les moyens d'étanchéité (40).

7. Dispositif (1) selon l'une quelconque des revendications précédentes,
**caractérisé en ce que**
l'élément d'aspiration (20) présente un chariot (23) qui s'engage sur le support sur palier (11) qui est disposé à l'extérieur de la chambre d'aspiration (10).

8. Dispositif (1) selon l'une quelconque des revendications précédentes,
**caractérisé en ce que**
l'élément d'aspiration (20) présente une région d'entrée (24) qui pénètre dans l'espace d'aspiration (4) et une région de sortie (28) qui est orientée dans la direction de la chambre d'aspiration (10), la région de sortie (28) étant notamment orientée tangentiellement par rapport à la chambre d'aspiration (10).

9. Dispositif (1) selon l'une quelconque des revendications précédentes,
**caractérisé en ce que**
l'élément d'aspiration (20) présente une allure courbe, au moins une paroi (25) étant prévue à l'intérieur de l'élément d'aspiration (20) de telle sorte qu'il se produise une résistance à l'écoulement au niveau de la paroi (25), laquelle fait en sorte d'éviter que des produits de rebut (2) ne restent à l'intérieur de l'élément d'aspiration (20), la paroi étant notamment réalisée sous forme de tôle directrice (26) qui influence au moins en partie le contour géométrique de l'élément d'aspiration (20), en particulier **en ce que** la tôle directrice (26) est inclinée obliquement par rapport à l'ouverture de la région d'entrée (24).

10. Dispositif (1) selon l'une quelconque des revendications précédentes,
**caractérisé en ce que**
le support sur palier (11) comprend un élément de rail (12), de sorte que l'élément d'aspiration (20) puisse notamment être déplacé linéairement.

11. Dispositif (1) selon l'une quelconque des revendications précédentes,
**caractérisé en ce que**
le chariot (23) présente une poignée (27) pour déplacer manuellement l'élément d'aspiration (20) le long de la chambre d'aspiration (10) et/ou **en ce que** le chariot (23) peut être déplacé par le biais d'un entraînement, en particulier d'un entraînement électrique.

12. Dispositif (1) selon l'une quelconque des revendications précédentes,
**caractérisé en ce que**
une pluralité d'éléments d'aspiration (20) sont disposés au niveau de la chambre d'aspiration (10) et/ou **en ce que** l'élément d'aspiration (20) est fixé de manière démontable sur la chambre d'aspiration (10).

13. Dispositif (1) selon l'une quelconque des revendications précédentes,
**caractérisé en ce que**
la chambre d'aspiration (10) présente, en section transversale, une forme rectangulaire et/ou **en ce que** la région d'entrée (24) de l'élément d'aspiration (20) présente une section transversale rectangulaire, le tube (21) s'étendant depuis la région d'entrée (24) présentant notamment une section transversale circulaire.

14. Machine de production (3) comprenant un dispositif (1) pour aspirer des produits de rebut (2), en particulier selon l'une quelconque des revendications 1 à 13, dans laquelle le dispositif (1) présente les caractéristiques suivantes :
une chambre d'aspiration (10), au niveau de laquelle est disposé au moins un élément d'aspiration (20) qui s'étend dans un espace d'aspiration (4) se trouvant à l'extérieur de la chambre d'aspiration (10) afin de transporter des produits de rebut (2) dans la chambre d'aspiration (10),
une unité d'aspiration (5) destinée à permettre de générer une dépression dans la chambre d'aspiration (10),
**caractérisée en ce qu'**un moyen d'étanchéité (40), qui s'applique contre l'élément d'aspiration (20) et qui ferme la chambre d'aspiration (10), est réalisé de telle sorte que l'élément d'aspiration (20) puisse être déplacé le long du moyen d'étanchéité (40), de sorte que la position de l'élément d'aspiration (20) contre la chambre d'aspiration (10) puisse être ajustée de manière variable, les moyens d'étanchéité (40) présentant une ouverture (41) pour l'élément d'aspiration (20), de sorte que l'élément d'aspiration (20) s'étende au moins en partie à travers l'ouverture (41) du moyen d'étanchéité (40), l'élément d'aspiration (20) pouvant être déplacé le long du moyen d'étanchéité (40), la position de l'ouverture (41) du moyen d'étanchéité (40) se déplaçant en même temps pendant le déplacement de l'élément d'aspiration (20).

15. Machine de production (3) selon l'une quelconque des revendications précédentes,
**caractérisée en ce qu'**il est prévu un entraînement de positionnement (50) qui permet un déplacement horizontal et/ou vertical du dispositif (1) sur la machine de production (3).
